# EUROPEAN PATENT APPLICATION

(11) **EP 4 825 197 A1**
(43) Date of publication of application: **21.10.2026**
(21) Application number: 26171391.1
(22) Date of filing: 09.04.2026
(51) Int. Cl.: A24D 3/10, A24D 3/02, A24D 3/04, A24D 3/06

(54) **SMOKING ARTICLE FILTER INCLUDING CAPSULE AND SMOKING ARTICLE INCLUDING THE SAME**

(30) Priority: 18.04.2025 KR 20250050722; 19.12.2025 KR 20250205137
(71) Applicant: KT&G Corporation, Daedeok-gu Daejeon 34337 (KR); Kolon Industries, Inc., Seoul 07793 (KR)
(72) Inventor: MOON, Sungmin, 34128 Daejeon (KR); YANG, Jinchul, 34128 Daejeon (KR); HA, Sunghoon, 34128 Daejeon (KR); HWANG, Minhee, 34128 Daejeon (KR); JEONG, Jongcheol, 07793 Seoul (KR); LEE, Jeonghun, 07793 Seoul (KR); SEO, Seungdong, 07793 Seoul (KR); PARK, Eunyoung, 07793 Seoul (KR)
(74) Representative: Isarpatent

(57) **Abstract**

A smoking article filter including a capsule and a smoking article including the same are provided. The smoking article filter includes filter tow including regenerated cellulose fibers, and a capsule that is disposed in the filter tow and crushable, wherein the capsule includes an inner core and a shell surrounding the inner core, and the shell includes a hydrophilic material.

## Description

### [Technical Field]

The present invention relates to a smoking article filter including a capsule and a smoking article including the same, and more particularly, to a smoking article filter having excellent quality due to the quality of a membrane material (or "capsule membrane" or "shell") of a capsule in the filter being maintained to be excellent in storage and distribution processes and a smoking article including the same.

### [Background Art]

Cellulose acetate tow (hereinafter "CA tow") is mostly used in manufacturing cigarette filters, and when a capsule filter using CA tow is stored for a long period of time, there are problems that the quality of a capsule membrane (or a shell) of a capsule included in the filter is degraded, and quality standards at an early stage of manufacture are not maintained. This is because the CA tow is a hydrophobic material in which moisture content tends to remain low, and accordingly has a negative influence on the quality of a capsule membrane manufactured using a hydrophilic material (e.g., agar, pectin, etc.).

A capsule consists of a flavor liquid and a thin membrane material (hereinafter, interchangeably used with "capsule membrane" or "shell" for convenience of description) in which the flavor liquid is encapsulated, and the capsule has a predetermined strength as moisture is evaporated through hardening and drying in a manufacturing process. However, such a thin membrane reacts sensitively to ambient temperature and humidity in storage, transportation, distribution, and filter manufacturing processes. In particular, in a CA filter (that is, a cellulose acetate filter) including CA tow in which moisture content remains low, a capsule membrane is deformed or fails to maintain a circular shape over time, a dent phenomenon occurs, and there is a problem that the flavor liquid is lost or there is a negative influence on a crushing feeling (affective quality) expected when a consumer crushes a capsule. In addition, although a crushing distance is maintained at a certain level due to quality management of a capsule membrane during manufacture of a capsule, when a CA filter is stored for a long period of time, a problem in which the crushing distance characteristic changes occurs in the CA filter.

Meanwhile, in recent years, there has been demand for an eco-friendly filter with excellent biodegradability for smoking articles. Accordingly, there is a need for development of a smoking article filter and a smoking article including the same allowing an eco-friendly filter with excellent biodegradability to be provided and allowing a capsule inserted thereinto to maintain excellent quality.

### [Disclosure]

### [Technical Problem]

The present invention is directed to providing a smoking article filter that has improved biodegradability due to being configured using filter tow (preferably regenerated cellulose tow, more preferably lyocell tow) made of cellulose-based fibers having excellent biodegradability, and a smoking article including the smoking article filter.

The present invention is also directed to providing a smoking article filter configured using tow (preferably, lyocell tow) made of hydrophilic cellulose-based fibers having excellent biodegradability and having a tendency in which moisture content increases over long-term distribution and storage periods, thereby allowing the quality of a shell (capsule membrane) encapsulating a flavor liquid to be excellent even during the long-term distribution and storage periods due to a hydrophilic property of the lyocell tow, and a smoking article including the smoking article filter.

The present invention is also directed to providing a smoking article filter configured using lyocell tow into which a capsule is inserted and including a functional additive dispersed in the lyocell tow and having a lipophilic or amphoteric property, thereby preventing a phenomenon in which moisture in the lyocell tow, having a hydrophilic property and having a tendency in which moisture content increases over long-term distribution and storage periods, excessively increases during the distribution and storage periods and thus preventing the quality of the capsule inserted into the smoking article filter from degrading due to an excessive increase in moisture content in the filter, and a smoking article including the smoking article filter. Accordingly, by providing an excellent crushing strength of a crushable capsule inserted into the smoking article filter, an excellent crushing feeling can be provided to a user when the user crushes the capsule during smoking.

The present invention is also directed to providing a smoking article filter in which a functional additive dispersed in lyocell tow into which a capsule is inserted imparts a coating effect to a portion of a capsule membrane, thereby preventing moisture in the lyocell tow having a hydrophilic property from permeating excessively through a shell (the capsule membrane) of the capsule and thus more stably maintaining the quality of the capsule, and a smoking article including the smoking article filter.

However, objectives of the present invention are not limited to those mentioned above, and other unmentioned objectives should be clearly understood by those of ordinary skill in the art to which the present invention pertains based on the description below.

### [Technical Solution]

One embodiment for achieving the above objectives provides a smoking article filter including filter tow including regenerated cellulose fibers, and a capsule that is disposed in the filter tow and crushable, wherein the capsule includes an inner core and a shell surrounding the inner core, and the shell includes a hydrophilic material.

In some embodiments, the smoking article filter may further include a functional additive dispersed in the filter tow.

In some embodiments, the functional additive may be a lipophilic or amphoteric material.

In some embodiments, the functional additive may include one or more selected from the group consisting of triethylene glycol (TEG), polyethylene glycol (PEG), ethylene glycol oligomers, ethylene glycol oligomer ether derivatives which are ether derivatives of the ethylene glycol oligomers, propylene glycol oligomers, and propylene glycol oligomer ether derivatives which are ether derivatives of the propylene glycol oligomers.

In some embodiments, the ethylene glycol oligomers may include at least one or more of diethylene glycol (DEG), triethylene glycol (TEG), tetraethylene glycol (TetraEG), and pentaethylene glycol (PentaEG), and the propylene glycol oligomers may include at least one or more of dipropylene glycol (DPG), tripropylene glycol (TPG), tetrapropylene glycol (TetraPG), and pentapropylene glycol (PentaPG).

In some embodiments, content of the functional additive may be 0.95 mg or less per length (mm) of the filter tow.

In some embodiments, the regenerated cellulose fibers may be hydrophilic.

In some embodiments, the regenerated cellulose fibers may include at least one or more of lyocell fibers, viscose fibers, and modal fibers.

In some embodiments, the regenerated cellulose fibers may include lyocell fibers.

In some embodiments, the hydrophilic material may include one or more water-soluble polymers selected from the group consisting of gelatin, agar, carrageenan, gellan gum, pectin, starch, and alginate.

In some embodiments, the inner core may include a flavor component.

In some embodiments, the flavor component may be a flavor liquid.

In some embodiments, the inner core may include a hydrophobic material.

Another embodiment for achieving the above objectives provides a smoking article including a smoking material portion and a filter portion disposed downstream of the smoking material portion, wherein the filter portion includes filter tow made of cellulose-based fibers and a capsule that is disposed in the filter tow and crushable, the capsule includes an inner core and a shell surrounding the inner core, the cellulose-based fibers are hydrophilic, and the shell includes a hydrophilic material.

In some embodiments, the smoking article may further include a functional additive dispersed in the filter tow, and the functional additive may be a lipophilic or amphoteric material.

In some embodiments, the cellulose-based fibers may be lyocell fibers, the filter tow may be lyocell tow, and the inner core may include a flavor liquid including a hydrophobic material.

### [Advantageous Effects]

According to a smoking article filter and a smoking article including the same according to one embodiment, since the filter is configured using regenerated cellulose tow, preferably lyocell tow, having excellent biodegradability, biodegradability of the smoking article filter or the smoking article including the same can be improved, and an eco-friendly product can be realized.

Also, since a hydrophilic property of lyocell tow is appropriately controlled even during long-term distribution and storage periods, the quality of a shell (preferably, a capsule membrane, a membrane material) encapsulating a flavor component (preferably, a flavor liquid) can be stably maintained, and decline in the quality such as deformation of the shell, damage to the shell, or leakage of the flavor liquid can be prevented.

Also, since a functional additive that is lipophilic or amphoteric is dispersed in lyocell tow, an excessive increase in moisture content in the lyocell tow constituting a lyocell filter can be suppressed, swelling or deterioration of a shell (or a capsule membrane) can be suppressed, and physical properties of a capsule can be maintained for a long period of time in storage and distribution processes, and thus product quality of a smoking article filter and a smoking article including the same can be improved.

Also, since a crushing strength of a capsule in a filter is maintained to be excellent, an excellent crushing feeling (tactile feedback) can be provided to a user when the user crushes the capsule during smoking, and sensory satisfaction of the user can be enhanced.

In addition, since a functional additive that is lipophilic or amphoteric imparts a coating effect to a portion of a shell (or a capsule membrane) of a capsule, moisture in lyocell tow can be prevented from permeating excessively through the shell (or capsule membrane), and even during long-term storage, decline in quality of the capsule can be prevented, and a flavor releasing characteristic and function of the product can be stably maintained.

The effects of the present invention are not limited to the foregoing effects, and it shall be understood that the effects of the present invention include all of the effects inferable from the detailed description of the present invention or the configuration of the invention described in the claims.

### [Description of Drawings]

FIG. 1 is a schematic perspective view of a smoking article according to one embodiment.
FIG. 2 is a schematic view of a crushable capsule according to one embodiment.
FIG. 3 is a schematic view for describing a smoking article filter rod manufactured in Examples 1 to 3 and Comparative Example 1.

### [Modes of the Invention]

Hereinafter, exemplary embodiments of the present disclosure will be described in detail with reference to the accompanying drawings. Advantages and features of the present disclosure and methods of achieving the same should become clear with embodiments described in detail below with reference to the accompanying drawings. However, the technical spirit of the present disclosure is not limited to the following embodiments and may be implemented in various different forms. The following embodiments are only provided to make the technical spirit of the present disclosure complete and completely inform those of ordinary skill in the art to which the present disclosure pertains of the scope of the present disclosure. The technical spirit of the present disclosure is defined only by the scope of the claims.

In assigning reference numerals to components of each drawing, it should be noted that the same reference numerals are assigned to the same components wherever possible even when the components are illustrated in different drawings. Also, in describing the present disclosure, when it is determined that the detailed description of a known related configuration or function may obscure the gist of the present disclosure, the detailed description thereof will be omitted.

Unless otherwise defined, all terms including technical or scientific terms used herein have the same meaning as commonly understood by those of ordinary skill in the art to which the present disclosure pertains. Terms defined in commonly used dictionaries should not be interpreted in an idealized or overly formal sense unless expressly so defined herein. Terms used herein are for describing the embodiments and are not intended to limit the present disclosure. In the specification, a singular expression includes a plural expression unless the context clearly indicates otherwise.

Also, in describing components of the present disclosure, terms such as "first," "second," "A," "B," "(a)," and "(b)" may be used. Such terms are only used for distinguishing one component from another component, and the essence, order, sequence, or the like of the corresponding components is not limited by the terms. In a case in which a certain component is described as being "connected," "coupled," or "linked" to another component, it should be understood that, although the component may be directly connected or linked to the other component, still another component may also be "connected," "coupled," or "linked" between the two components.

The terms "comprises", "comprising", "contain", "containing", "include", "including", "have" and/or "having" used herein do not preclude the presence or addition of one or more components, steps, operations, and/or devices other than those mentioned.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

The use of the term "at least one" or "one or more" will be understood to include one as well as any quantity more than one. In addition, the use of the phrase "at least one of X, Y, and Z" will be understood to include X alone, Y alone, and Z alone, as well as any combination of X, Y, and Z.

As used herein any reference to "one embodiment" or "an embodiment" means that a particular element, feature, structure, or characteristic described in connection with the embodiment is included in at least one embodiment. The appearances of the phrase "in one embodiment" in various places in the specification are not necessarily all referring to the same embodiment.

First, some terms used herein will be clarified.

In the present specification, "smoking article" may refer to any product that can be smoked or any product that can provide a smoking experience, regardless of whether the product is based on tobacco, tobacco derivatives, expanded tobacco, reconstituted tobacco, or tobacco substitutes. For example, smoking articles may include products that can be smoked, such as cigarettes, cigars, and cigarillos.

In the present specification, "smoking material" may refer to any type of material that may be used in a smoking article.

In the present specification, "filter portion" refers to a component including a filtering material. For example, a filter element may include a plurality of fiber strands.

In the present specification, "upstream" or "upstream direction" may refer to a direction away from the mouth of a smoker, and "downstream" or "downstream direction" may refer to a direction toward the mouth of the smoker.

In the present specification, "longitudinal direction" may refer to a direction corresponding to a longitudinal axis of a smoking article. The "longitudinal axis" of a smoking article may refer to a virtual line extending in the main longitudinal direction of the smoking article. This axis usually continues from one side end (e.g., a mouthpiece or filter end) of a smoking article to the other side end (e.g., a combustion or heat source end).

In the present specification, "regenerated cellulose filter" refers to a filter including regenerated cellulose tow or made of regenerated cellulose tow.

In the present specification, "lyocell filter" refers to a filter including lyocell tow or made of lyocell tow.

In the present specification, "viscose filter" refers to a filter including viscose tow or made of viscose tow.

In the present specification, "modal filter" refers to a filter including modal tow or consisting of modal tow.

In the present specification, "regenerated cellulose tow" includes a plurality of regenerated cellulose-based fibers or consists of a plurality of regenerated cellulose-based fibers. In some embodiments, regenerated cellulose tow may be a bundle formed by cross-linking adjacent regenerated cellulose-based fibers.

In the present specification, "lyocell tow" includes a plurality of lyocell fibers or consists of a plurality of lyocell fibers. In some embodiments, lyocell tow may be a bundle formed by cross-linking adjacent lyocell fibers.

In the present specification, "viscose tow" includes a plurality of viscose fibers or consists of a plurality of viscose fibers. In some embodiments, viscose tow may be a bundle formed by cross-linking adjacent viscose fibers.

In the present specification, "modal tow" includes a plurality of modal fibers or consists of a plurality of modal fibers. In some embodiments, modal tow may be a bundle formed by cross-linking adjacent modal fibers.

In the present specification, "regenerated cellulose fibers" may refer to cellulose-based fibers formed by processing a naturally generated cellulose-based material.

In the present specification, "lyocell fibers", "viscose fibers" and "modal fibers" may refer to eco-friendly fibers made of cellulose extracted from wood pulp. Specifically, "lyocell fibers", "viscose fibers" and "modal fibers" may be fibers made of cellulose derived, or mainly derived, from wood pulp.

In the present specification, "non-circular cross-section" is defined as a cross-section having a shape including a plurality of protrusions instead of having a circular shape. For example, a cross-section having a shape in which a plurality of protrusions branch and/or extend from a center and/or the center of the cross-section may be referred to as "non-circular cross-section." Here, "protrusions" may refer to distinct, extended segments or arms extending outward from a central core or a joining point of a cross-section of a regenerated cellulose-based fiber (preferably, a lyocell fiber).

In the present specification, "crushing strength" may refer to a pressure, that is, load (kgf), applied to a capsule when the capsule is crushed.

In the present specification, "crushing distance" may refer to an insertion distance (mm) when a capsule inserted into a filter is crushed.

In some embodiments, a regenerated cellulose-based fiber (preferably, a lyocell fiber) may have a Y-shaped cross-section with three protrusions branching and/or extending from the center and/or the center of the cross-section, a cross-shaped cross-section with four protrusions, a star-shaped cross-section with five or more protrusions, or an O-shaped cross-section, but the present disclosure is not limited thereto.

In some embodiments, a regenerated cellulose-based fiber (preferably, a lyocell fiber) may include three or more protrusions branching and/or extending from the center and/or the center of the cross-section.

In some embodiments, a regenerated cellulose-based fiber (preferably, a lyocell fiber) included in regenerated cellulose tow (preferably, lyocell tow) may have a Y-shaped cross-section in terms of its intended use for application to smoking article filters.

In the present specification, "consisting of" a certain component may mean being made of the corresponding component.

In the present specification, a wrapper (for example, wrapping paper) may surround at least a portion of a surface around a longitudinal axis of each portion and/or structure of a smoking article.

In the present specification, "basis weight" refers to a mass per unit area of wrapping paper and/or a wrapper. A basis weight of wrapping paper and/or a wrapper may be determined by measuring the mass and area of the wrapping paper and/or wrapper and dividing the mass of the wrapping paper and/or wrapper by the area thereof. The unit of the basis weight may be grams per square meter (gsm), i.e., g/m².

In the present specification, the "mono denier" of regenerated cellulose tow (preferably, lyocell tow) refers to the denier of one strand of monofilament separated from a multifilament of regenerated cellulose-based fibers (preferably, lyocell fibers) constituting the regenerated cellulose tow (preferably, lyocell tow).

In the present specification, the "total denier" of regenerated cellulose tow (preferably, lyocell tow) refers to the denier of a multifilament of regenerated cellulose-based fibers (preferably, lyocell fibers) constituting the regenerated cellulose tow (preferably, lyocell tow).

In the present specification, "moisture ratio" is the proportion of moisture contained in a sample and may be defined as the percentage of the difference in the weight of the sample before drying and after drying relative to the weight of the sample before drying measured by a moisture meter, for example, of Brabender GmbH & Co. KG, and the unit of moisture ratio may be %. A specific equation for calculating "moisture ratio" will be described below.

In the present specification, "crushing strength" may be a strength measured by applying a test load of 5 N and a test velocity of 20 mm/min using a crushing strength testing device, and the unit of crushing strength may be kgf.

Hereinafter, various embodiments of the present disclosure will be described in detail with reference to the accompanying drawings.

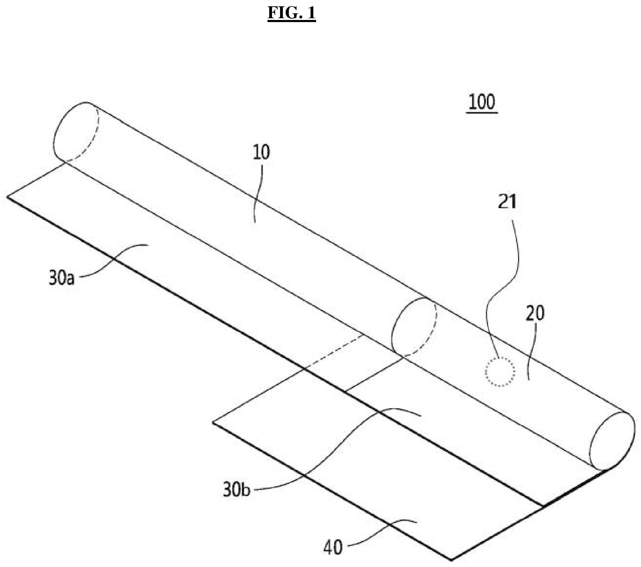

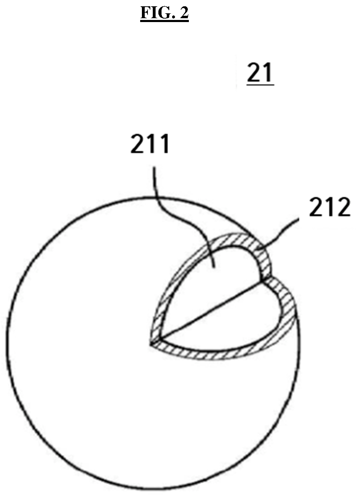

FIG. 1 is a schematic perspective view of a smoking article according to one embodiment, and FIG. 2 is a schematic view of a crushable capsule according to one embodiment.

Throughout the specification, "smoking article" may refer to anything capable of generating an aerosol, such as tobacco (cigarettes) and cigars. The smoking article may include an aerosol-generating material and/or an aerosol-forming substrate. Also, the smoking article may include a solid material based on tobacco raw materials, such as reconstituted tobacco leaves, cut tobacco, and reconstituted tobacco. A smoking material may include volatile compounds.

Referring to FIG. 1, a smoking article 100 includes a smoking material portion 10 and a filter portion 20 disposed downstream of the smoking material portion 10. The smoking article 100 may further include a smoking material portion wrapper 30a, a filter portion wrapper 30b, and tipping paper 40. A smoking article filter according to the present invention may include the filter portion 20 and the filter portion wrapper 30b surrounding the filter portion 20. The smoking material portion wrapper 30a and/or the filter portion wrapper 30b may each be located at an outermost side of the smoking article 100 and may each be a single wrapper or a combination of a plurality of wrappers.

Throughout the specification, "upstream" or "upstream direction" refers to a direction away from the mouth of a user (consumer) smoking the smoking article 100, and "downstream" or "downstream direction" refers to a direction toward the mouth of the user (consumer) smoking the smoking article 100. For example, in the smoking article 100 illustrated in FIG. 1, the smoking material portion 10 is disposed upstream or in an upstream direction of the filter portion 20 included in the smoking article filter.

Further, in the present specification, the smoking article 100 may be a combustion-type cigarette or a heating-type cigarette that is used together with an aerosol generation device such as an electronic cigarette device.

In some embodiments, the smoking material portion 10 may be filled with at least one or more of a tobacco material, a nicotine-containing material, and an aerosol-generating material. In some embodiments, the smoking material portion 10 may be filled with only one of the tobacco material, the nicotine-containing material, and the aerosol-generating material or may be filled with a mixture of two or more of the tobacco material, the nicotine-containing material, and the aerosol-generating material. In some embodiments, the smoking material portion 10 may be configured by one of the tobacco material and the nicotine-containing material being mixed with the aerosol-generating material at a predetermined ratio.

In some embodiments, the tobacco material may include a smoking material such as raw tobacco leaves, reconstituted tobacco leaves, or a mixture of tobacco leaves and reconstituted tobacco leaves. In some embodiments, a processed smoking material may be in the form of cut tobacco, tobacco particles, a tobacco sheet, tobacco beads, tobacco granules, tobacco powder, and/or a tobacco extract. In particular, for example, the tobacco material may include one or more of tobacco leaves, lateral veins of tobacco leaves, expanded tobacco, cut tobacco, cut reconstituted tobacco leaves, and reconstituted tobacco. In some embodiments, the smoking material portion 10 may be filled with the processed smoking material of various forms.

In some embodiments, a nicotine liquid composition may be adsorbed or contained in the nicotine-containing material. In some embodiments, the nicotine-containing material may be formulated in the form of any one of a granule, a tablet, and a sheet. In some embodiments, the smoking material portion 10 may be filled with the nicotine-containing material of various forms.

In some embodiments, the aerosol-generating material may include at least one of glycerin, propylene glycol, ethylene glycol, dipropylene glycol, diethylene glycol, triethylene glycol, tetraethylene glycol, and oleyl alcohol, but the present disclosure is not limited thereto.

In some embodiments, the smoking material portion 10 may contain other additives such as a flavoring agent, a wetting agent, and/or an acetate compound. In some embodiments, the aerosol-generating material and/or the additives may be contained in the smoking material.

In some embodiments, the smoking material portion 10 may be wrapped with the smoking material portion wrapper 30a.

In some embodiments, the smoking material portion 10 may have the form of a longitudinally extending rod whose length, circumference, and diameter are not particularly limited, but the length, circumference, and diameter may be adjusted to sizes generally used in the art in consideration of the amount of smoking material filled therein, user (consumer) preferences, or the like.

In some embodiments, the smoking article filter may be disposed downstream of the smoking material portion 10. In some embodiments, the filter portion 20 of the smoking article filter is disposed downstream of the smoking material portion 10 and serves as a filter through which an aerosol material generated in the smoking material portion 10 passes right before being inhaled by the user (consumer or smoker). In some embodiments, the filter portion 20 may be manufactured using various materials or manufactured in various forms. Meanwhile, in the present specification, for convenience of description, the terms "smoking article filter" and "filter portion" may be interchangeably used.

The smoking article filter according to one embodiment of the present invention may include the filter portion 20, a capsule 21 that is disposed in the filter portion 20 and crushable, the filter portion wrapper 30b surrounding the filter portion 20, and a functional additive dispersed in the filter portion 20.

In some embodiments, the filter portion 20 may include filter tow including or consisting of a filter material. The filter material may include or may consist of cellulose-based fibers.

In some embodiments, the cellulose-based fibers included in the filter portion 20 may include or may consist of regenerated cellulose fibers, and the filter portion 20 may be regenerated cellulose tow. In some embodiments, the regenerated cellulose fibers may be hydrophilic. In some embodiments, the hydrophilic regenerated cellulose fibers may include or may consist of at least one or more of lyocell fibers, viscose fibers, and modal fibers. Preferably, the filter portion 20 may include or may consist of lyocell tow including or consisting of lyocell fibers. In some embodiments, the cellulose-based fibers included in the filter portion 20 may be hydrophilic, and the filter portion 20 may include or may consist of hydrophilic cellulose tow. That is, regenerated cellulose tow including or consisting of a plurality of regenerated cellulose fibers may be lyocell tow including or consisting of a plurality of lyocell fibers.

In some embodiments, the lyocell tow may only include the plurality of lyocell fibers and may not include fibers other than the lyocell fibers. That is, in some embodiments, the lyocell tow may be made of the plurality of lyocell fibers. As the lyocell tow is made only of lyocell fibers, biodegradability of the smoking article filter including the filter portion including the lyocell tow may be excellent.

Description will be given below based on a case in which the regenerated cellulose fibers are lyocell fibers, and the regenerated cellulose tow is lyocell tow. However, the present disclosure is not limited thereto, and the regenerated cellulose fibers may be other fibers as long as the fibers are based on cellulose that is not chemically modified.

In some embodiments, the lyocell fibers may have a non-circular cross-section. The non-circular cross-section is defined as a cross-section having a shape including a plurality of protrusions instead of having a circular shape. For example, a cross-section having a shape in which a plurality of protrusions extend from the center may be referred to as "non-circular cross-section."

In some embodiments, the lyocell fibers may have a Y-shaped cross-section with three protrusions branching from the center, a cross-shaped cross-section with four protrusions, a star-shaped cross-section with five or more protrusions, or an O-shaped cross-section, but the present disclosure is not limited thereto.

The smoking article filter including hydrophilic regenerated cellulose tow (preferably, lyocell tow) may replace all or part of an existing filter portion 20 of a smoking article, and when the smoking article filter replaces part of an existing filter portion 20, a filter material that is used conventionally may be used together. For example, a cellulose acetate filter, a hollow tube filter, or the like may be used as the conventional filter material. In some embodiments, the filter portion 20 may consist of regenerated cellulose tow, preferably lyocell tow.

The filter portion 20 is illustrated as a mono filter made of a single filter in FIG. 1, but the present disclosure is not limited thereto. For example, the filter portion 20 may be provided as a dual filter, a triple filter, or the like, which includes two or more filters, in order to increase filter efficiency.

In some embodiments, moisture ratio of filter tow (lyocell tow) of the filter portion 20 (preferably, a lyocell filter) may range from 5% to 12%, from 5.5% to 12%, from 6% to 12%, from 6.5% to 12%, or from 7% to 12%, from 5% to 11.5%, from 5.5% to 11.5%, from 6% to 11.5%, from 6.5% to 11.5%, or from 7% to 11.5%, from 5% to 11%, from 5.5% to 11%, from 6% to 11%, from 6.5% to 11%, or from 7% to 11%, from 5% to 10.5%, from 5.5% to 10.5%, from 6% to 10.5%, from 6.5% to 10.5%, or from 7% to 10.5%, from 5% to 10%, from 5.5% to 10%, from 6% to 10%, from 6.5% to 10%, or from 7% to 10%, from 5% to 9.5%, from 5.5% to 9.5%, from 6% to 9.5%, from 6.5% to 9.5%, or from 7% to 9.5%, from 5% to 9%, from 5.5% to 9%, from 6% to 9%, from 6.5% to 9%, or from 7% to 9%, or from 5% to 8.5%, from 5.5% to 8.5%, from 6% to 8.5%, from 6.5% to 8.5%, or from 7% to 8.5%. Preferably, the moisture ratio of the lyocell filter may range from 5% to 12%, preferably from 5% to 10%, and more preferably from 7% to 9%. Within this range, the filter can have moisture content that allows the quality of a capsule in the filter to be maintained to be excellent.

In some embodiments, the smoking article filter may include at least one or more capsules 21 disposed in the filter portion 20. Specifically, in some embodiments, the capsule 21 may be disposed in or inserted into filter tow of the filter portion 20. In some embodiments, the capsule 21 may be disposed in the filter tow, e.g., lyocell tow. In some embodiments, the capsule 21 may be disposed in the filter portion 20 and may be crushable by an external force. In some embodiments, the capsule 21 may be a flavor capsule that delivers a flavor or taste. In some embodiments, the capsule 21 may be surrounded by the filter tow, for example the lyocell tow, of the filter portion 20, and/or may be crushable by an external force.

Referring to FIGS. 1 and 2, in some embodiments, the capsule 21 may include an inner core 211 including a flavor component and a shell 212 surrounding the inner core 211. In other words, in some embodiments, the capsule 21 may have a core-shell-structure. In some embodiments, the capsule 21 may have a structure in which the inner core 211 contains a flavor component therein, and the shell 212 surrounds the inner core 211 to encapsulate the flavor component. In some embodiments, the shell 212 of the capsule 21 may be destructed by an external force, for example by crushing the capsule 21 by an external force, and the flavor component may be released from the inner core 211. In some embodiments, the flavor component released to the outside may move toward a downstream side of the smoking article 100. For example, the external force may be a force generated by a smoker's hand or mouth, but is not particularly limited thereto.

In some embodiments, the inner core 211 may include a flavor component. In some embodiments, the flavor component may be a flavor liquid. In some embodiments, the flavor component may include a hydrophobic material, and the flavor liquid may be a hydrophobic flavor liquid. In some embodiments, examples of the flavor component may include menthol, peppermint, spearmint oil, mint, chocolate, cocoa, coffee, licorice, cilantro, eucalyptol, bergamot oil, rosemary oil, geranium oil, lemon oil, grapefruit oil, ginger oil, various fruit-flavored components, etc., and preferably, the flavor component may include or may consist of menthol, but the present flavor component is not limited thereto. That is, the flavor component may be a formulation of a component that can provide various flavors or tastes to the user (or smoker).

In some embodiments, the shell 212 may surround the inner core. In some embodiments, the shell 212 may be a membrane material, that is, a capsule membrane, surrounding the inner core 211 of the capsule 21. Accordingly, in some embodiments, the capsule 21 may be a spherical or cylindrical capsule having a structure in which a flavor liquid including a flavor component is encapsulated in a film. However, the shape of the capsule 21 is not limited thereto, and the capsule 21 may be implemented in various other shapes.

In some embodiments, the shell 212 may include a water-soluble material or a hydrophilic material. In some embodiments, the shell 212 may include a water-soluble polymer material. In some embodiments, the shell 212 may be formed of a material having elasticity or flexibility to prevent the capsule 21 from being destructed unintentionally. In some embodiments, the hydrophilic material included in the shell 212 may include or may consist of one or more water-soluble polymers selected from the group consisting of gelatin, agar, carrageenan, gellan gum, pectin, starch, and alginate. The present disclosure is not limited thereto, and, in some embodiments, the shell 212 may include or may consist of at least one of a starch derivative such as dextrin or maltodextrin, a cellulose derivative such as hydroxypropyl methyl cellulose (HPMC), hydroxypropyl cellulose (HPC), methyl cellulose (MC), or carboxymethyl cellulose (CMC), polyvinyl alcohol, and polyol. The shell 212 may be hydrophilic due to being manufactured to include a hydrophilic material.

In the case of the smoking article filter according to the present invention, because the capsule 21 having a structure in which the inner core 211 including a hydrophobic flavor liquid is surrounded by the shell 212 including a water-soluble polymer having a hydrophilic property is inserted into the lyocell tow having a hydrophilic property, due to the hydrophilic characteristic of the lyocell tow, deformation of the water-soluble shell 212 of the capsule 21 that is sensitive to temperature and humidity can be minimized, and the quality of the capsule 21 inserted into the filter can be uniformly maintained even during long-term distribution and storage periods. For example, while, in the case of a cellulose acetate filter, moisture content tends to decrease over long-term storage, and a dent phenomenon occurs in the shell 212, which is the membrane material of the capsule 21, when moisture content decreases around the shell 212 including a water-soluble polymer, in the case of a hydrophilic lyocell filter, due to the hydrophilic property, moisture content is uniformly maintained or increases, and the quality of the shell 212 of the capsule 21 can be uniformly maintained.

In some embodiments, an overall diameter of the capsule 21 may range from about 2.0 mm to about 8.5 mm. Specifically, in some embodiments, the overall diameter of the capsule 21 may range from about 2.0 mm to about 8.5 mm, from about 2.0 mm to about 7.5 mm, from about 2.0 mm to about 6.5 mm, from about 2.0 mm to about 5.5 mm, from about 2.0 mm to about 4.5 mm, from about 2.0 mm to about 3.5 mm, from about 2.5 mm to about 8.5 mm, from about 2.5 mm to about 7.5 mm, from about 2.5 mm to about 6.5 mm, from about 2.5 mm to about 5.5 mm, from about 2.5 mm to about 4.5 mm, from about 2.5 mm to about 3.5 mm, from about 3.0 mm to about 8.5 mm, from about 3.0 mm to about 7.5 mm, from about 3.0 mm to about 6.5 mm, from about 3.0 mm to about 5.5 mm, from about 3.0 mm to about 4.5 mm, from about 3.0 mm to about 3.5 mm, from about 3.1 mm to about 3.5 mm, from about 3.1 mm to about 3.4 mm, from about 3.2 mm to about 3.5 mm, or from about 3.2 mm to about 3.4 mm. However, the diameter of the capsule 21 may be appropriately changed within a range that can be included in a diameter of the smoking article or the smoking article filter.

In some embodiments, a crushing strength of the capsule 21 may range from about 0.5 kgf to about 3.7 kgf. Specifically, in some embodiments, the crushing strength of the capsule 21 may range from about 0.5 kgf to about 3.7 kgf, from about 0.5 kgf to about 3.5 kgf, from about 0.5 kgf to about 3.3 kgf, from about 0.5 kgf to about 3.1 kgf, from about 0.5 kgf to about 3.0 kgf, from about 0.5 kgf to about 2.8 kgf, from about 0.5 kgf to about 2.5 kgf, from about 0.5 kgf to about 2.2 kgf, from about 0.5 kgf to about 2.0 kgf, from about 1.0 kgf to about 3.7 kgf, from about 1.0 kgf to about 3.5 kgf, from about 1.0 kgf to about 3.3 kgf, from about 1.0 kgf to about 3.1 kgf, from about 1.0 kgf to about 3.0 kgf, from about 1.0 kgf to about 2.8 kgf, from about 1.0 kgf to about 2.5 kgf, from about 1.0 kgf to about 2.2 kgf, from about 1.0 kgf to about 2.0 kgf, from about 1.5 kgf to about 3.7 kgf, from about 1.5 kgf to about 3.5 kgf, from about 1.5 kgf to about 3.3 kgf, from about 1.5 kgf to about 3.1 kgf, from about 1.5 kgf to about 3.0 kgf, from about 1.5 kgf to about 2.8 kgf, from about 1.5 kgf to about 2.5 kgf, from about 1.5 kgf to about 2.2 kgf, or from about 1.5 kgf to about 2.0 kgf. However, the crushing strength of the capsule 21 may be appropriately changed by those of ordinary skill in the art within a range in which the capsule 21 can be destructed by an external force.

In some embodiments, the smoking article filter may include a functional additive dispersed in the filter tow of the filter portion 20. In some embodiments, the functional additive may be a lipophilic or amphoteric material.

In some embodiments, the functional additive may include at least one or more of triethylene glycol (TEG), polyethylene glycol (PEG), an oligomer that is a short-chain structure made by combining a few or a small number of polyhydric alcohols which are monomer units having the same structure, and an ether derivative of the oligomer. The oligomer may be a low molecular weight polymer in which two or more polyhydric alcohols of the same structure are repeated and combined, and the ether derivative of the oligomer may be a polymer in which at least one or more hydroxyl groups (-OH) of the polymer are substituted with ethers. As used in this specification, "oligomer" is a short-chain structure made by combining a few or a small number of monomers, in particular 2 to 10 monomers.

In some embodiments, the polyhydric alcohols constituting the oligomer, which is an example material of the functional additive, may include one of ethylene glycol (EG) and propylene glycol (PG).

In some embodiments, the functional additive may include one or more selected from the group consisting of triethylene glycol (TEG), polyethylene glycol (PEG), ethylene glycol oligomers, ethylene glycol oligomer ether derivatives which are ether derivatives of the ethylene glycol oligomers, propylene glycol oligomers, and propylene glycol oligomer ether derivatives which are ether derivatives of the propylene glycol oligomers.

In some embodiments, the ethylene glycol oligomer may include at least one or more of diethylene glycol (DEG), triethylene glycol (TEG), tetraethylene glycol (TetraEG), and pentaethylene glycol (PentaEG), and the propylene glycol oligomer may include at least one or more of dipropylene glycol (DPG), tripropylene glycol (TPG), tetrapropylene glycol (TetraPG), and pentapropylene glycol (PentaPG).

Preferably, the functional additive may include or may consist of at least one or more of triethylene glycol (TEG) and polyethylene glycol (PEG).

In some embodiments, the functional additive that is amphoteric or lipophilic may be dispersed in the hydrophilic lyocell tow and may perform a function of preventing decline in the quality of the shell 212 due to moisture in the lyocell tow being delivered excessively toward the shell 212 that is hydrophilic or water-soluble and surrounds the inner core 211 including the flavor component of the hydrophobic flavor liquid.

In some embodiments, the functional additive may be dispersed throughout an entire region of the filter tow. Although not limited thereto, in some embodiments, the functional additive may also be dispersed in a portion of an outer surface of the capsule 21. Specifically, in some embodiments, the functional additive may be dispersed in a portion of a surface of the shell 212, that is, the capsule membrane, of the capsule 21. Accordingly, in some embodiments, the outer surface of the capsule 21 may be partially coated with the functional additive that is lipophilic or amphoteric, and decline in the quality of the shell 212 due to moisture in the lyocell tow can be efficiently prevented.

In some embodiments, when the functional additive is polyethylene glycol (PEG), a weight average molecular weight (M.W) of polyethylene glycol (PEG) may range from 50 to 10,000, from 50 to 2500, from 200 to 2000, or from 500 to 700, or may be 600.

In some embodiments, the content of the functional additive dispersed in the filter tow (preferably, lyocell tow) may be 100 mg or less, 98 mg or less, 96 mg or less, 94 mg or less, 92 mg or less, 90 mg or less, 88 mg or less, 86 mg or less, 84 mg or less, or 82 mg or less, preferably 80 mg or less, 78 mg or less, 76 mg or less, 74 mg or less, 72 mg or less, 70 mg or less, 68 mg or less, 66 mg or less, 64 mg or less, 62 mg or less, 60 mg or less, 58 mg or less, or 56 mg or less, and more preferably 55 mg or less, based on the length of the filter tow that is 108 mm. When the functional additive is dispersed in an amount of 80 mg or more based on the length of the filter tow that is 108 mm, the filter portion wrapper 30b surrounding the filter tow may get wet due to the functional additive.

In some embodiments, the content of the functional additive dispersed in the filter tow (preferably, lyocell tow) may be 0.95 mg or less, 0.94 mg or less, 0.92 mg or less, 0.90 mg or less, 0.88 mg or less, 0.86 mg or less, 0.84 mg or less, 0.82 mg or less, 0.80 mg or less, 0.78 mg or less, or 0.76 mg or less, preferably 0.74 mg or less, per length (mm) of the filter tow based on the length of the filter tow. Within the above ranges, decline in the quality of the capsule due to the functional additive included in the filter tow can be prevented, phenol reducing performance can be implemented, and the possibility of leakage of the functional additive included in the filter tow can be reduced.

In some embodiments, the filter portion 20 may be surrounded and wrapped with the filter portion wrapper 30b.

In some embodiments, the filter portion wrapper 30b may include wrapping paper. The filter portion wrapper 30b may include general wrapping paper, hard wrapping paper, porous wrapping paper, nonporous wrapping paper, grease-resistant hard wrapping paper, etc.

Hereinafter, the configurations of the present invention and the advantageous effects according thereto will be described in more detail using examples and comparative examples. However, the examples are merely for describing the present invention in more detail, and the scope of the present invention is not limited to these examples.

### Example 1 (L-filter rod, blank)

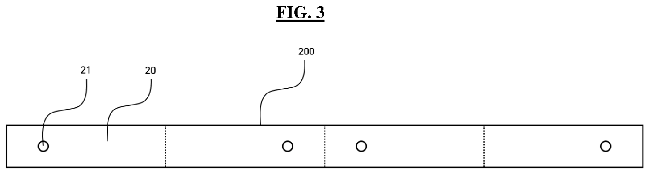

Referring to FIG. 3, a smoking article filter rod 200 having a circumference of 24.20 mm, a length of 108 mm, and resistance to draw of about 460 mmWG was manufactured by inserting four capsules 21, each including menthol as a flavor liquid and including a capsule membrane encapsulating the flavor liquid and including water, agar, pectin, and glycerin, spaced from one another into lyocell tow having a mono denier of 2.9 and a total denier of 32,000 and wrapping the lyocell tow with nonporous grease-resistant wrapping paper having a basis weight of 30 gsm. The content of menthol in each capsule was 3.2 mg and was 33 wt% relative to the total weight of each capsule, and each capsule had a diameter of 3.35 mm and a weight of 18.8 mg. Meanwhile, based on smoking article filters 20 each having a length of 27 mm that are manufactured by dividing the smoking article filter rod 200 having a length of 108 mm into four pieces, the four capsules in the smoking article filter rod 200 having a length of 108 mm were inserted to be spaced at predetermined intervals from one another as illustrated in FIG. 3 so that each capsule was spaced about 7.5 mm from one end of one of the smoking article filters 20 each having a length of 27 mm.

### Example 2 (L-filter rod + 13.5 mg of PEG 600)

A smoking article filter rod was manufactured in the same manner as in Example 1 except that 13.5 mg of PEG 600 was applied as a functional additive on lyocell tow having capsules inserted thereinto, and PEG 600 was dispersed in the lyocell tow.

### Example 3 (L-filter rod + 13.5 mg of TEG)

A smoking article filter rod was manufactured in the same manner as in Example 1 except that 13.5 mg of TEG was applied as a functional additive on lyocell tow having capsules inserted thereinto, and TEG was dispersed in the lyocell tow.

### Comparative Example 1 (CA-filter rod + 14.8 mg of TEC)

A smoking article filter rod was manufactured in the same manner as in Example 1 except that cellulose acetate tow was applied as fibers constituting the filter rod, and 14.8 mg of TEC was applied on the cellulose acetate tow.

### Experimental Example 1: Analysis of moisture ratio according to storage period of smoking article filter

The smoking article filter rods 200 of Examples 1 to 3 and Comparative Example 1 were stored in a vacuum plastic bag for different periods (1 week, 4 weeks, 2 months, 4 months, and 8 months) under conditions including an internal temperature of 22 °C and a relative humidity of 60%. After storing the smoking article filter rods for different periods (1 week, 4 weeks, 2 months, 4 months, and 8 months), five smoking article filter rods were randomly selected for each period (1 week, 4 weeks, 2 months, 4 months, and 8 months), the selected smoking article filter rods were vertically cut, capsules were removed therefrom, and then the smoking article filter rods were unfolded and placed on a drying plate. For samples prepared in this way, a moisture ratio in the smoking article filter rods was measured for each period (1 week, 4 weeks, 2 months, 4 months, and 8 months) using a moisture meter of Brabender GmbH & Co. KG, and the measurement results are shown in Table 1.

Meanwhile, in this specification, "moisture ratio" is the proportion of moisture contained in a sample and is automatically calculated by the moisture meter of Brabender GmbH & Co. KG according to Equation 1 below. [Equation 1] $Moisture Ratio \left(%\right) = \left(\frac{Weight of sample before drying - Weight of sample after drying}{Weight of sample before drying}\right) ∗ 100$

**[Table 1]**

| | **Storage period** | **Moisture ratio (%)** | **Change amount of moisture ratio (%,** |
|---|---|---|---|
| | | | **8 months-0 weeks)** |
| **Comparative Example 1** | 0 weeks | 5.2 | 0.4 |
| | 1 week | 5.1 | |
| | 4 weeks | 5.2 | |
| | 2 months | 5.4 | |
| | 4 months | 5.3 | |
| | 8 months | 5.6 | |
| **Example 1** | 0 weeks | 5.1 | 3.0 |
| | 1 week | 5.2 | |
| | 4 weeks | 6.9 | |
| | 2 months | 7.4 | |
| | 4 months | 7.8 | |
| | 8 months | 8.1 | |
| **Example 2** | 0 weeks | 5.2 | 2.3 |
| | 1 week | 5.5 | |
| | 4 weeks | 6.8 | |
| | 2 months | 7.2 | |
| | 4 months | 7.3 | |
| | 8 months | 7.5 | |
| **Example 3** | 0 weeks | 5.1 | 2.1 |
| | 1 week | 5.4 | |
| | 4 weeks | 6.7 | |
| | 2 months | 7.0 | |
| | 4 months | 7.2 | |
| | 8 months | 7.2 | |

As shown in Table 1 above, it can be confirmed that the moisture ratio in the filter of Comparative Example 1 which was the cellulose acetate filter having a hydrophobic property was lower than the moisture ratio in the filters of Examples 1 to 3 which were the lyocell filters having a hydrophilic property. That is, it can be confirmed that moisture content in the filter was higher in the lyocell filters having a hydrophilic property (Examples 1 to 3) than in the cellulose acetate filter having a hydrophobic property (Comparative Example 1). In particular, referring to changes in the moisture ratio in the filters by period, a change amount between the moisture ratio at 0 weeks and the moisture ratio after 8 months was 0.4 in Comparative Example 1 and 3.0, 2.3, and 2.1 respectively in Examples 1 to 3, and it can be confirmed that moisture content in the filters of Examples 1 to 3 tended to increase over a long-term storage period.

Further, from the change amount between the moisture ratio at 0 weeks and the moisture ratio after 8 months being 3.0 in Example 1 and being 2.3 and 2.1 respectively in Examples 2 and 3, it can be confirmed that, when a functional additive such as PEG, which is a lipophilic material, and/or TEG, which is an amphoteric material, is dispersed in the lyocell filter, the moisture content in the filter can be better prevented from excessively increasing even during long-term storage, compared to when the functional additive is not added.

As a result, it can be confirmed that, during long-term storage, the moisture ratio in the filter was higher in the lyocell filters (Examples 1 to 3) than in the cellulose acetate filter (Comparative Example 1), and among Examples 1 to 3, an excessive increase in the moisture content in the filter was better prevented when a functional additive was added into the filter (Examples 2 and 3) compared to when the functional additive was not added (Example 1).

### Experimental Example 2: Analysis of moisture ratio of smoking material portion (cut tobacco portion) and smoking article filter (filter portion) when smoking article including smoking article filter is manufactured

Smoking articles were manufactured by connecting a smoking material portion filled with cut tobacco and the smoking article filters 20, each having a length of 27 mm due to dividing the smoking article filter rods 200 each having a length of 108 mm of Examples 1 and 2 and Comparative Example 1, and wrapping the smoking material portion and the smoking article filters 20 with cigarette paper, the manufactured smoking articles were stored in a vacuum plastic bag for 8 months under conditions including an internal temperature of 22 °C and a relative humidity of 60%, the smoking articles were randomly selected after 8 months, and the moisture ratio was measured for each smoking material portion and each smoking article filter in the same manner as in Experimental Example 1.

Specifically, the moisture ratio of the smoking material portion was analyzed using the moisture meter of Brabender GmbH & Co. KG after removing the cigarette paper and the smoking article filter from the manufactured smoking article and collecting the cut tobacco with which the smoking material portion was filled, the moisture ratio of the smoking article filter was analyzed using the moisture meter of Brabender GmbH & Co. KG after removing the cigarette paper and the smoking material portion from the manufactured smoking article and collecting a sample in the same manner as in Experimental Example 1, and the moisture ratio of each smoking material portion and each smoking article filter is shown in Table 2.

**[Table 2]**

| **Measurement site** | **Classification** | **Moisture ratio (%)** |
|---|---|---|
| **Smoking material portion (cut tobacco portion)** | **Comparative Example 1** | 11.56 |
| | **Example 1** | 11.59 |
| | **Example 2** | 11.49 |
| **Smoking article filter (filter portion)** | **Comparative Example 1** | 6.48 |
| | **Example 1** | 8.11 |
| | **Example 2** | 8.20 |

As shown in Table 2, it can be confirmed that the moisture ratio in the smoking material portion filled with cut tobacco was similar among Comparative Example 1, Example 1, and Example 2. Therefore, it can be confirmed that the moisture condition in the smoking material portions can also be similarly maintained when smoking articles are manufactured by connecting the smoking article filters of Comparative Example 1, Example 1, and Example 2 and the smoking material portions.

In addition, as with the analysis results of Experimental Example 1, the moisture ratio of the smoking article filter (filter portion) was higher in Example 1 and Example 2 than in Comparative Example 1. Accordingly, it can be confirmed that, even when smoking articles were manufactured by connecting the smoking article filters of Comparative Example 1, Example 1, and Example 2 and the smoking material portions, the filters of Examples 1 and 2 each contained more moisture than the filter of Comparative Example 1. Accordingly, it can be confirmed that, even when the smoking article filters are connected to the smoking material portions filled with cut tobacco, a moisture containing property is maintained according to the type of tow constituting each smoking article filter. Such a result is expected to be due to a hydrophilic characteristic of the lyocell fibers that causes the lyocell fibers to absorb moisture from surroundings and maintain the absorbed moisture in the filter during long-term storage.

### Experimental Example 3: Analysis of crushing strength, crushing distance, and appearance quality of capsule in filter according to storage period

Twenty samples were randomly selected among the smoking article filter rods 200 of Examples 1 to 3 and Comparative Example 1, capsules inserted into each smoking article filter rod were taken out from each smoking article filter rod, a crushing strength (unit: kgf), which is a pressure (load) applied to a capsule when the capsule is crushed, was measured for each capsule using a crushing strength measurement device (Lloyd LF-plus), and the measurement results are shown in Table 3. Also, twenty samples were randomly selected among the smoking article filter rods of Examples 1 to 3 and Comparative Example 1, a crushing distance (unit: mm), which is an insertion distance when a capsule in a smoking article filter rod is crushed, was measured for each capsule, and the measurement results are shown in Table 3.

In addition, twenty samples were randomly selected among the smoking article filter rods of Examples 1 to 3 and Comparative Example 1, four capsules inserted into each smoking article filter rod were each taken out, outer shapes of a total of eighty capsules that were taken out were observed to check whether a dent occurred, a dent (an appearance defect) was evaluated as having occurred when a capsule failed to maintain its circular shape and was dented, when a dent (an appearance defect) occurred, a dent occurrence ratio was calculated according to Equation 2, and the results are shown in Table 3 below. [Equation 2] $Dent Occurrence Ratio \left(%\right) = \frac{Number of dents occurred}{Total number of capsules} ∗ 100$

**[Table 3]**

| **Classification** | **Storage period** | **Crushing strength (kgf)** | **Crushing distance (mm)** | **Appearance defects (dent occurrence ratio (%))** |
|---|---|---|---|---|
| **Comparative Example 1** | 0 weeks | 1.506 | 1.03 | x |
| | 1 week | 1.541 | 1.19 | x |
| | 2 weeks | 1.628 | 1.32 | x |
| | 4 weeks | 1.608 | 1.34 | x |
| | 2 months | 1.631 | 1.41 | O (71%) |
| | 4 months | 1.588 | 1.39 | O (100%) |
| | 8 months | 1.621 | 1.45 | O (100%) |
| **Example 1** | 0 weeks | 1.721 | 1.01 | x |
| | 1 week | 1.691 | 1.04 | x |
| | 2 weeks | 1.704 | 1.11 | x |
| | 4 weeks | 1.604 | 1.08 | x |
| | 2 months | 1.553 | 1.22 | x |
| | 4 months | 1.714 | 1.31 | x |
| | 8 months | 1.631 | 1.15 | O (40%) |
| **Example 2** | 0 weeks | 1.636 | 0.96 | x |
| | 1 week | 1.610 | 0.98 | x |
| | 2 weeks | 1.599 | 1.04 | x |
| | 4 weeks | 1.525 | 1.11 | x |
| | 2 months | 1.720 | 1.32 | x |
| | 4 months | 1.656 | 1.35 | O (43%) |
| | 8 months | 1.700 | 1.26 | O (100%) |
| **Example 3** | 0 weeks | 1.605 | 0.97 | x |
| | 1 week | 1.569 | 0.98 | x |
| | 2 weeks | 1.634 | 1.08 | x |
| | 4 weeks | 1.571 | 1.16 | x |
| | 2 months | 1.708 | 1.29 | x |
| | 4 months | 1.625 | 1.29 | O (5%) |
| | 8 months | 1.613 | 1.22 | O (45%) |

Referring to Table 3 above, it can be confirmed that a dent in a capsule started to occur in the storage period of 2 months in the case of Comparative Example 1, occurred in the storage period of 8 months in the case of Example 1, and started to occur in the storage period of 4 months in Examples 2 and 3. Therefore, it can be confirmed that a point in time at which a dent occurred in a capsule tended to be delayed in Examples 1 to 3 compared to Comparative Example 1.

In addition, it can be confirmed that the dent occurrence ratio was the highest in Comparative Example 1 in which the moisture ratio in the filter was the lowest, and the dent occurrence ratio was the lowest and a dent occurred the latest in Example 1 in which the moisture ratio was the highest. Accordingly, it can be confirmed that the occurrence of a dent in the inserted capsules significantly decreased and the point in time at which a dent occurred was delayed in the lyocell filter made of lyocell tow compared to the cellulose acetate filter.

In addition, comparing the crushing distances of the capsules in the storage period of 8 months, the crushing distance was measured to be 1.45 mm in the case of Comparative Example 1 and was measured to be 1.15 mm, 1.26 mm, and 1.22 mm respectively in the cases of Examples 1 to 3. Considering that the crushing distance at an initial stage (0 weeks) was about 1.0 mm, it can be confirmed that an increase in the crushing distance was the greatest in Comparative Example 1, and the increase was the smallest in Example 1. This is expected to be due to the outer shape or physical properties of a capsule inserted into the filter changing when the crushing distance significantly increases, and accordingly, it can be confirmed that quality consistency of the capsules of Examples 1 to 3 is excellent even during long-term storage.

In addition, as a result of comparing crushing strength differences between the storage period of 8 months and the initial stage (0 weeks) (crushing strength at 8 months-crushing strength at 0 weeks), the crushing strength difference was 0.115 in Comparative Example 1, -0.090 in Example 1, 0.064 in Example 2, and 0.008 in Example 3. That is, a change in the crushing strength was the smallest in Example 3 and was the greatest in Comparative Example 1. This is expected to be due to internal moisture retention being excellent and the quality of shells of capsules sensitive to moisture being uniformly maintained during a long period of time in the case of the lyocell filter, while the crushing strength gradually increases over a storage period as moisture retention in capsules decreases and the capsules are deformed in the case of the cellulose acetate filter in which moisture content is low.

Although embodiments of the present disclosure have been described above with reference to the accompanying drawings, those of ordinary skill in the art to which the present disclosure pertains should understand that the present disclosure may be embodied in other specific forms without changing the technical spirit or essential features thereof. Therefore, the embodiments described above should be understood as being illustrative, instead of limiting, in all aspects. The scope of protection of the present disclosure should be interpreted based on the claims below, and all technical ideas within the scope equivalent to the claims should be interpreted as falling within the scope of rights of the technical spirit defined by the present disclosure.

## Claims

1. A smoking article filter comprising:
filter tow including regenerated cellulose fibers; and
a capsule that is disposed in the filter tow and crushable,
wherein the capsule includes an inner core and a shell surrounding the inner core, and
the shell includes a hydrophilic material.

2. The smoking article filter of claim 1, further comprising a functional additive dispersed in the filter tow.

3. The smoking article filter of claim 2, wherein the functional additive is a lipophilic material or amphoteric material.

4. The smoking article filter of claim 2, wherein the functional additive includes one or more selected from the group consisting of triethylene glycol (TEG), polyethylene glycol (PEG), ethylene glycol oligomers, ethylene glycol oligomer ether derivatives which are ether derivatives of the ethylene glycol oligomers, propylene glycol oligomers, and propylene glycol oligomer ether derivatives which are ether derivatives of the propylene glycol oligomers.

5. The smoking article filter of claim 2, wherein content of the functional additive is 0.95 mg or less per length (mm) of the filter tow.

6. The smoking article filter of claim 1, wherein the regenerated cellulose fibers are hydrophilic.

7. The smoking article filter of claim 1, wherein the regenerated cellulose fibers include at least one or more of lyocell fibers, viscose fibers, and modal fibers.

8. The smoking article filter of claim 1, wherein the regenerated cellulose fibers include lyocell fibers.

9. The smoking article filter of claim 1, wherein the hydrophilic material includes one or more water-soluble polymers selected from the group consisting of gelatin, agar, carrageenan, gellan gum, pectin, starch, and alginate.

10. The smoking article filter of claim 1, wherein the inner core includes a flavor component.

11. The smoking article filter of claim 10, wherein the flavor component is a flavor liquid.

12. The smoking article filter of claim 1, wherein the inner core includes a hydrophobic material.

13. A smoking article comprising:
a smoking material portion; and
a filter portion disposed downstream of the smoking material portion,
wherein the filter portion includes:
filter tow formed of cellulose-based fibers; and
a capsule that is disposed in the filter tow and crushable,
the capsule includes an inner core and a shell surrounding the inner core,
the cellulose-based fibers are hydrophilic, and
the shell includes a hydrophilic material.

14. The smoking article of claim 13, further comprising a functional additive dispersed in the filter tow,
wherein the functional additive is a lipophilic material or amphoteric material.

15. The smoking article of claim 13, wherein:
the cellulose-based fibers are lyocell fibers;
the filter tow is lyocell tow; and
the inner core includes a flavor liquid including a hydrophobic material.
